# EUROPÄISCHE PATENTSCHRIFT

(11) **EP 4 449 030 B1**
(45) Veröffentlichungstag und Bekanntmachung des Hinweises auf die Patenterteilung: **21.01.2026**
(21) Anmeldenummer: 22839713.9
(22) Anmeldetag: 16.12.2022
(51) Int. Cl.: F24S 50/00, F24S 40/90, F24S 23/77

(54) **VERFAHREN ZUR VERMESSUNG VON HELIOSTATEN UND VERFAHREN ZUR KALIBRIERUNG VON HELIOSTATEN**
METHOD FOR MEASURING HELIOSTATS, AND METHOD FOR CALIBRATING HELIOSTATS
PROCÉDÉ DE MESURE D'HÉLIOSTATS, ET PROCÉDÉ D'ÉTALONNAGE D'HÉLIOSTATS

(30) Priorität: 17.12.2021 DE 102021133719
(43) Veröffentlichungstag der Anmeldung: 23.10.2024
(73) Patentinhaber: Deutsches Zentrum für Luft- und Raumfahrt e.V., 53227 Bonn (DE)
(72) Erfinder: NETTELROTH, Vincent, 50733 Köln (DE); LEIBAUER, Moritz, 40593 Düsseldorf (DE)
(74) Vertreter: dompatent
(86) Internationale Anmeldenummer: PCT/EP2022/086317
(87) Internationale Veröffentlichungsnummer: WO 2023/111252

(56) Entgegenhaltungen:
- DE-A1- 102015 224 982
- DE-A1- 3 325 919
- US-A1- 2018 299 264
- US-B2- 7 994 459
- US-B2- 9 222 702
- SATTLER JOHANNES CHRISTOPH ET AL: "Review of heliostat calibration and tracking control methods", SOLAR ENERGY, ELSEVIER, AMSTERDAM, NL, vol. 207, 30 June 2020 (2020-06-30), pages 110 - 132, XP086263028, ISSN: 0038-092X, [retrieved on 20200630], DOI: 10.1016/J.SOLENER.2020.06.030
- KALIBRIERUNG > ET AL: "Verfahren zur Vermessung und Kalibrierung von Heliostaten", 4 July 2018 (2018-07-04), pages 1 - 32, XP055845643, Retrieved from the Internet <URL:https://elib.dlr.de/122783/1/20180704_Soko18_Vermessung_Kalibrierung_Helios_FINAL.pdf> [retrieved on 20210928]

## Beschreibung

Die vorliegende Erfindung betrifft ein Verfahren zur Vermessung von Heliostaten eines mehrere Heliostaten aufweisenden Heliostatenfeldes eines Solarturmkraftwerks sowie ein Verfahren zur Kalibrierung von derartigen Heliostaten.

Solarturmkraftwerke weisen ein Heliostatenfeld aus einer Vielzahl von Heliostaten auf, wobei jeder Heliostat mindestens einen Reflektor mit einer Spiegelfläche aufweist, über den solare Strahlung auf einen Absorber konzentriert werden kann.

Die Heliostaten sind häufig entlang gekrümmten Bahnen um den Solarturm angeordnet. Die Abstände der Heliostaten zum Turm/Absorber können dabei zwischen mehreren hundert Metern bis zu mehr als ein Kilometer je nach Position des Heliostaten variieren. Jeder Reflektor weist eine Fokallänge auf, die an den Abstand des Reflektors von dem Absorber angepasst ist.

Während des Betriebs werden die Heliostate dem Sonnenstand nachgeführt. Die charakterisierenden Parameter, die für eine genaue Nachführung der Heliostaten notwendig sind, sind zumeist Folgende: zwei Winkel zur Beschreibung der Verkippung (Azimut-Achse, Elevations-Achse), Offset jeweils für die Elevations- und die Azimut-Achse, zwei Parameter, welche die Nichtlinearität der Antriebe beschreiben, ein Winkel, welcher die Abweichung von 90° zwischen Elevations- und Azimut-Achse beschreibt, sowie die Abweichung zwischen der durch die Spiegel definierten optischen Achse und der optischen Achse, wie sie durch die Stellung der Achsen eigentlich definiert ist.

Um eine möglichst genaue Fokussierung eines Heliostaten auf dem Absorber zu erreichen, müssen die genannten Offsets und Parameter bestimmt werden, um eine Kalibrierung der Steuerung des Heliostaten zu ermöglichen. Ferner sind die Offsets und Parameter auch während des Betriebs zu prüfen, um etwaigen Anpassungen vorzunehmen.

Die bekannten Verfahren zur Bestimmung des Offsets nutzen die sogenannte Kamera-Target-Methode, bei der ein Brennfleck des Heliostats auf einem weißen, diffus reflektierenden Target mit einer Kamera beobachtet wird.

Es gibt ferner Ansätze, eine fotometrische Auswertung von Bildern der Spiegelfläche vorzunehmen. Diese sind in EP 1 717 568 A2 und DE 10 2011 080 969 der Anmelderin beschrieben. In diesen Verfahren werden Reflexionen eines Targets auf der Spiegelfläche des Reflektors mit einer Kamera aufgenommen und ausgewertet. Diese beiden bekannten Verfahren sind für die Vermessung von Parabolrinnenkollektoren optimiert.

Die bekannten Flussdichte-basierten Verfahren benötigen eine feste Hardwareinstallation an dem Turm und sind darüber hinaus abhängig vom Sonnenstand bzw. der Verfügbarkeit von direkter Sonnenstrahlung. Eine Einzelkalibrierung von Heliostaten benötigt aufgrund der großen Anzahl von Heliostaten eine sehr langen Zeitraum.

Aus DE 10 2015 217 086 A1 ist es bekannt, ein Fluggerät über ein Heliostatfeld zu fliegen und das auf dem Reflektor eines Heliostaten erzeugte Abbild des Fluggeräts aufzunehmen, um mittels der Position des Fluggeräts zum Zeitpunkt der Aufnahme und der Position des Abbilds auf dem Reflektor auf die Ausrichtung des Heliostaten zu schließen. US 7 994 459 B2 offenbart ein Verfahren zur Vermessung von Heliostaten eines mehrere Heliostaten aufweisenden Heliostatenfeldes eines einen Solarturm aufweisenden Solarturmkraftwerks, wobei die Heliostaten jeweils mindestens einen eine Spiegelfläche aufweisenden Reflektor aufweisen mit den Schritten: Bereitstellen einer Lichtquelle; Ausrichten zumindest einiger zu vermessender Heliostaten, um Licht der Lichtquelle auf einen vorgegebenen Zielbereich zu reflektieren, wo eine Kamera angeordnet ist; Aufnahme von Bildern eines der oder mehrerer der zu vermessenden Heliostaten mittels der Kamera in einem vorgegebenen Zeitabstand; Auswerten der Bilder; und Bestimmen eines Zielvektors jedes der zu vermessenden Heliostaten und Vergleich mit einem Sollwert zur Bestimmung einer Soll-Ist-Abweichung; wobei zumindest die Schritte a) bis c) zu einem Zeitpunkt mit geringer solarer Strahlung oder nachts durchgeführt werden.

Es ist daher die Aufgabe der vorliegenden Erfindung, ein Verfahren zur Vermessung von Heliostaten bereitzustellen, das unabhängig von Sonneneinstrahlung ist und darüber hinaus mit geringem hardwaretechnischem Aufwand und sehr genau und sehr schnell durchführbar ist. Es ist ferner die Aufgabe der vorliegenden Erfindung, ein Verfahren zur Kalibrierung von Heliostaten bereitzustellen.

Die Erfindung ist definiert durch die Merkmale des Anspruchs 1 sowie die Merkmale des Anspruchs 11 und des Anspruchs 17.

Das erfindungsgemäße Verfahren zur Vermessung von Heliostasten eines mehrere Heliostaten aufweisenden Heliostatenfeldes eines einen Solarturm aufweisenden Solarturmkraftwerks, wobei die Heliostaten jeweils mindestens einen eine Spiegelfläche aufweisenden Reflektor aufweisen, sieht folgende Schritte vor:
a) Bereitstellen einer Lichtquelle, wobei die Lichtquelle in einem Reflexionsbereich von zumindest einigen zu vermessenden Heliostaten ist
b) Ausrichten zumindest einiger der zu vermessenden Heliostaten, um Licht der Lichtquelle auf einen vorgegebenen Zielpunkt oder Zielbereich am Himmel oder im Nahbereich des Solarturms zu reflektieren,
c) Bewegen eines Fluggeräts mit mindestens einer Kamera entlang einem vorgegebenen Flugmuster um und über den Zielpunkt oder Zielbereich und gleichzeitige Aufnahme von Bildern eines der oder mehrerer der zu vermessenden Heliostaten mittels der Kamera in einem vorgegebenen Zeitabstand,
d) Auswerten der Bilder, wobei für jeden der zu vermessenden Heliostaten in zumindest einigen der Bilder festgestellt wird, ob Licht der Lichtquelle in die Kamera reflektiert wurde, und wobei ein virtuelles Target aus den Bildern mittels einer zuvor bestimmten oder gespeicherten Aufnahmeposition des entsprechenden Bildes berechnet wird, wobei der Fokuspunkt für jeden zu vermessenden Heliostaten auf dem virtuellen Target bestimmt wird,
e) Bestimmen eines Zielvektors jedes der zu vermessenden Heliostaten anhand des Fokuspunktes auf dem virtuellen Target und Vergleich mit einem Sollwert zur Bestimmung einer Soll-Ist-Abweichung,
   wobei zumindest die Schritte a) bis c) zu einem Zeitpunkt mit geringer solarer Strahlung oder nachts durchgeführt werden.

Ein Zeitpunkt mit geringer solarer Strahlung kann beispielsweise ein Zeitpunkt während der Dämmerung eines Tages oder ein Zeitpunkt mit starker Bewölkung sein, an dem üblicherweise mittels der Heliostaten keine Solarstrahlung auf den Solarturm konzentriert wird.

Unter "Reflexionsbereich" eines Heliostaten wird der Bereich verstanden, der von dem Heliostaten "sichtbar" ist, also der Bereich, von dem mittels der Spiegelfläche des Heliostaten etwas reflektiert werden kann.

Die Lichtquelle ist vorzugsweise an einem Turm oder dem Solarturm angeordnet. Sie kann aber auch an einem anderen Ort angeordnet sein oder auch beweglich sein und beispielsweise an einem zweiten Fluggerät angeordnet sein.

Das erfindungsgemäße Verfahren hat den besonderen Vorteil, dass eine sehr hohe Anzahl von Heliostaten auf eine einfache Art und Weise vermessen werden können, indem diese beim Überfliegen mittels des Fluggeräts fotografiert werden und anschließend eine Auswertung der Bilder erfolgt. Beispielsweise können die Verfahrensschritte b) bis e) auch wiederholt werden, wobei verschiedene Ausrichtungen der zu vermessenden Heliostaten erfolgen. Es kann dabei eine Datenakquise in sehr kurzen Zyklen für die verschiedene Ausrichtungen der Heliostaten durchgeführt werden kann. Das erfindungsgemäße Verfahren ermöglicht somit in vorteilhafter Weise, dass einerseits eine parallelisierte bzw. nahezu parallelisierte Datenerfassung erfolgen kann, indem mehrere Heliostaten gleichzeitig aufgenommen werden und andererseits eine hohe zeitliche Dichte der Messpunkterfassung ermöglicht wird.

Die Durchführung der Verfahrensschritte a) bis c) nachts hat den besonderen Vorteil, dass aufgrund der Dunkelheit ein hoher Kontrast zwischen angestrahlten und nicht angestrahlten Heliostaten vorliegt und darüber hinaus der laufende Betrieb während des Tages nicht gestört wird. Der Aufwand bei der Auswertung der Bilder ist auch relativ gering, da lediglich für jedes Bild und jeden zu vermessenden Heliostaten bestimmt wird, ob Licht in die Kamera reflektiert wurde oder nicht. Somit sind lediglich binäre Informationen pro Position auf der Flugroute auszuwerten.

Darüber hinaus hat die Variante des erfindungsgemäßen Verfahrens, bei dem die Lichtquelle an einem Turm bzw. dem Solarturm angeordnet ist, den Vorteil, dass die konzentrierten Lichtstrahlen von der Lichtquelle an dem Turm bzw. dem Solarturm ausgehen und somit von einer stationären Lichtquelle, sodass anders als bei der Verwendung von beispielsweise der Sonne die Position der Heliostaten nicht zur Anpassung der sich verändernder Position der Lichtquelle verändert werden muss.

Durch die Lichtquelle besteht auch keine Gefahr, dass eine Beschädigung von beispielsweise dem Fluggerät aufgrund einer zu starken Strahlung, wie es beispielsweise bei der Verwendung von Solarstrahlung vorkommen könnte, vorliegt.

Durch die Wahl des Zielpunkts oder Zielbereichs am Himmel oder im Nahbereich des Solarturms kann die Qualität des Vermessungsergebnisses erhöht werden. Beispielsweise kann die Entfernung des Zielpunkts bzw. Zielbereichs von den Heliostaten vergrößert werden, wodurch die Auflösung und Stabilität des Verfahrens erhöht werden kann. Um die Qualität der aufgenommenen Bilder auch bei größeren Entfernungen weiterhin zu gewährleisten, können Teleobjektive verwendet werden.

Die in Schritt c) aufgenommenen Bilder können beispielsweise auch als Filmsequenz bzw. -sequenzen aufgenommen werden.

Das erfindungsgemäße Verfahren kann vorsehen, dass die Lichtquelle durch einen auf einem Target erzeugten Lichtfleck gebildet ist, wobei das Target an dem einem Turm. Vorzugsweise dem Solarturm angeordnet ist. Das Target wird durch eine externe Leuchte zur Bildung des Lichtflecks angestrahlt, das die den Lichtfleck bildende Strahlung reflektiert oder das Target wird zur Bildung des Lichtflecks durch eine Leuchte hinterleuchtet. Dies hat den Vorteil, dass bereits am Solarturm vorhandene Targets für die Durchführung des erfindungsgemäßen Verfahrens verwendet werden können. Darüber hinaus sind die Targets zumeist in unmittelbarer Nähe zu einem Receiver an dem Turm angeordnet, sodass sichergestellt ist, dass die zu vermessenden Heliostaten das von dem Target reflektierte Licht empfangen können und nicht durch einen anderen Heliostaten abgeschattet werden. Die Leuchte kann beispielsweise am Boden angeordnet sein, sodass an dem Solarturm kein zusätzlicher vorrichtungstechnischer Aufwand notwendig ist.

Zusätzlich oder alternativ kann vorgesehen sein, dass die Lichtquelle durch eine oder mehrere an dem Solarturm angeordneten Leuchten gebildet ist.

Vorzugsweise ist vorgesehen, dass die Größe des Lichtflecks oder einer Leuchtfläche der Leuchte oder der Leuchten an die Größe einer Reflexion der Sonne durch mindestens einen der Heliostaten auf den Solarturm, vorzugsweise auf das Target, angepasst ist. Es kann auch vorgesehen sein, dass die Form des Lichtflecks oder einer Leuchtfläche der Leuchte oder der Leuchten an die Form einer Reflexion der Sonne durch mindestens einen der Heliostaten auf den Solarturm, vorzugsweise auf das Target, angepasst ist. Bei der Verwendung von mehreren Leuchten muss die von den Leuchten gebildete Leuchtfläche nicht notwendigerweise vollständig "ausgeleuchtet" sein, sondern die Leuchten können auch voneinander beabstandet sein und entsprechend der Form und/oder Größe der Reflexion der Sonne angeordnet sein.

Durch die Anpassung von Größe und/oder Form des Lichtflecks oder der Leuchtfläche an das auf den Solarturm reflektierte Abbild der Sonne wird erreicht, dass der von einem Heliostaten zur Reflexion genutzte Anteil vergleichbar ist mit dem Anteil, der im normalen Einsatz des Heliostaten verwendet wird. Dadurch wird eine hohe Genauigkeit bei der Vermessung der Heliostaten erreicht.

Das Flugmuster, entlang dem das Fluggerät bewegt wird, kann eine Mäander- oder Spiralform enthalten. Dadurch ist in vorteilhafter Weise eine große Fläche abdeckbar. Das Fluggerät kann beispielsweise eine Drohne sein.

Vorzugsweise ist vorgesehen, dass das Flugmuster in einer Ebene, in der der vorgegebenen Zielpunkt oder der Zielbereich liegt, angeordnet ist. Dadurch wird vermieden, dass Umrechnungen der aufgenommenen Bilder hinsichtlich der Ebene, in dem der Zielbereich oder der Zielpunkt liegt, erfolgen müssen. Es kann auch vorgesehen ein, dass das Flugmuster entlang einer virtuellen Kugel verläuft, was den Vorteil hat, dass jeder Heliostat die gleiche Neigung zu einer durch das Flugmuster gebildeten Fläche haben-

Die Schritte d) und e) können nach Beendigung des Schrittes c) offline von dem Fluggerät erfolgen. Mit anderen Worten: Die Bilder können von dem Fluggerät an einen zentralen Rechner übermittelt sein und dieser kann unabhängig von den Schritten a) bis c) die Auswertung der Bilder vornehmen. Grundsätzlich kann natürlich die Auswertung der Bilder bereits während des Fluges des Fluggeräts begonnen werden.

Das erfindungsgemäße Verfahren kann vorsehen, dass mehrere Marker im Heliostatenfeld vorgesehen sind, wobei in Schritt d) anhand der Marker in den Bildern einzelne der zu vermessenden Heliostaten identifizierbar sind. Dadurch wird erreicht, dass in jedem Bild ein Heliostat eindeutig identifiziert werden kann, sodass für diesen Heliostaten festgestellt werden kann, ob Licht in die Kamera reflektiert wird oder nicht.

Bei der Identifizierung einzelner der zu vermessenden Heliostaten kann eine Simulation, die die Position zumindest einiger der Heliostaten und der Marker enthält, verwendet werden und ein Abgleich der Simulation mit den Bilden kann erfolgen. Dadurch kann auf einfache Art und Weise ein Pixel in dem Bild einem Heliostaten zugeordnet werden.

Ein weiteres Verfahren zur Vermessung von Heliostaten eines mehrere Heliostaten aufweisenden Heliostatenfeldes eines einen Solarturm aufweisenden Solarturmkraftwerks, wobei die Heliostaten jeweils mindestens einen eine Spiegelfläche aufweisenden Reflektor aufweisen mit folgenden Schritten:
a) Bereitstellen einer beweglichen Lichtquelle und Bewegen der Lichtquelle durch einen Reflexionsbereich von zumindest einigen zu vermessenden Heliostaten,
b) Bestimmen der Position der Lichtquelle zu verschiedenen Zeitpunkten,
c) Ausrichten zumindest einiger zu vermessender Heliostaten, um Licht der Lichtquelle auf ein eine Zielfläche zu reflektieren, wobei an der Zielfläche eine Vielzahl von Kameras in einem Raster angeordnet sind,
d) Aufnahme von Bildern eines der oder mehrerer der zu vermessenden Heliostaten mittels der Kameras in einem vorgegebenen Zeitabstand,
e) Auswerten der Bilder, wobei für jeden der zu vermessenden Heliostaten in zumindest einigen der Bilder festgestellt wird, ob Licht der Lichtquelle in eine der Kameras reflektiert wurde, und wobei aus den Bildern mittels der zuvor bestimmten Position Lichtquelle der Fokuspunkt für jeden zu vermessenden Heliostaten auf der Zielfläche bestimmt wird,
f) Bestimmen eines Zielvektors jedes der zu vermessenden Heliostaten anhand des Fokuspunktes auf der Zielfläche und Vergleich mit einem Sollwert zur Bestimmung einer Soll-Ist-Abweichung,
wobei zumindest die Schritte a) bis d) zu einem Zeitpunkt mit geringer solarer Strahlung oder nachts durchgeführt werden.

Die weitere Variante eines erfindungsgemäßen Verfahrens ist im Wesentlichen eine Umkehr des zuvor beschriebenen erfindungsgemäßen Verfahrens. Somit gelten die zuvor beschriebenen Vorteile entsprechend auch bei dieser Variante des Verfahrens. Anstelle einer stationären Lichtquelle und einer beweglichen Kamera ist bei dieser Variante eine bewegliche Lichtquelle vorgesehen und ein Raster von stationären Kameras. Grundsätzliche wäre jedoch auch denkbar, dass an der Zielfläche ein oder mehrere bewegliche Kameras angeordnet sind, die an unterschiedlichen Messpunkten, die den Rasterpunkten entsprechen, positionierbar sind. Beispielsweise könnte eine Kamera oder könnten mehrere Kameras entlang Schienen bewegt werden und an den Messpunkten entsprechend Bilder aufnehmen.

Es kann vorgesehen sein, dass die Kamera oder die Kameras jeweils eine Fischaugenlinse aufweisen, oder pro Messpunkt zwei Kameras, die in unterschiedliche Richtungen gerichtet sind, angeordnet oder anordenbar sind. Dadurch kann pro Messpunkt ein besonders großer Bereich aufgenommen werden.

Die Lichtquelle kann mittels eines Fluggeräts bewegt werden.

Die Position der Lichtquelle kann durch Tracken der Lichtquelle mittels eines Tachymeters bestimmt werden.

Die Lichtquelle kann ein von innen beleuchteter Ballon sein.

Die Lichtquelle entlang einer Flugbahn bewegt werden, die an unterschiedliche Sonnenbahnen, entlang denen die Sonne sich im Jahresverlauf bewegt, angepasst ist. Dadurch Die Vermessung kann unabhängig vom Sonnenstand erfolgen, wobei quasi jederzeit auch Daten aufgenommen werden können für Messpunkte, die einem Sonnenstand entsprechen, der nur kurzzeitig im Laufe eines Jahres auftritt. Auch kann eine große Anzahl Daten in sehr kurzer Zeit aufgenommen werden, also mit einer hohen zeitlichen Dichte der Datenpunkte.

Das erfindungsgemäße Verfahren kann vorsehen, dass mehrere Marker im Heliostatenfeld vorgesehen sind, wobei in Schritt e) anhand der Marker in den Bildern einzelne der zu vermessenden Heliostaten identifizierbar sind. Dadurch wird erreicht, dass in jedem Bild ein Heliostat eindeutig identifiziert werden kann, sodass für diesen Heliostaten festgestellt werden kann, ob Licht in die Kamera oder Kameras reflektiert wird oder nicht.

Die Erfindung sieht ferner ein Verfahren zur Kalibrierung von Heliostaten vor. Dabei kann das erfindungsgemäße Verfahren durchgeführt werden. Anschließend können die zu vermessenden Heliostaten mittels der Soll-Ist-Abweichung kalibriert werden.

Im Folgenden wird die Erfindung unter Bezugnahme auf die nachfolgenden Figuren näher erläutert.

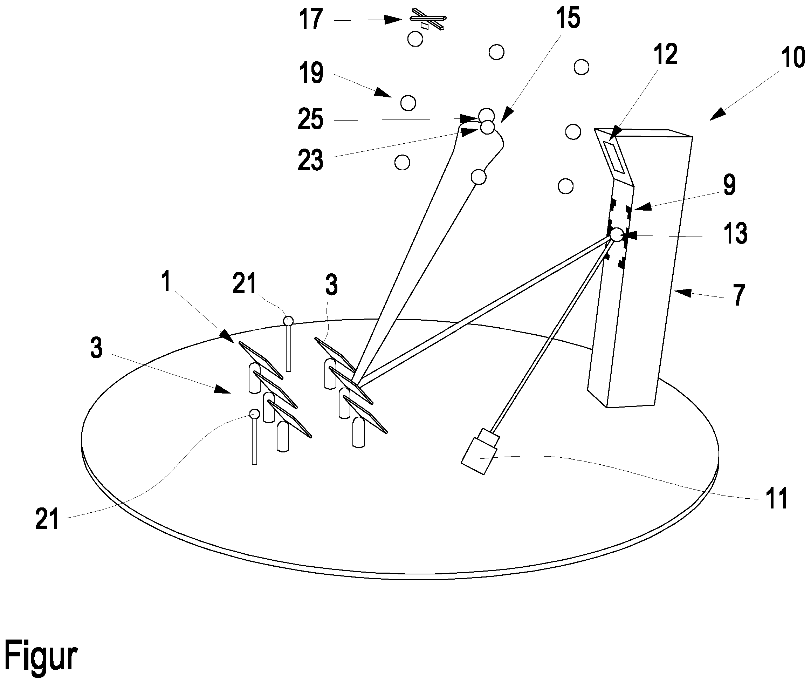

Die einzige Figur zeigt eine schematische Darstellung eines Solarturmkraftwerks 10, anhand derer eine Variante des erfindungsgemäßen Verfahren beschrieben wird.

Das erfindungsgemäße Verfahren dient zur Vermessung von Heliostaten 1 eines mehrere Heliostaten 1 aufweisenden Heliostatfeldes 3 eines einen Solarturm 7 aufweisenden Solarturmkraftwerks 10. Die Heliostaten 1 weisen jeweils einen Reflektor mit mindestens einer Spiegelfläche auf.

An dem Solarturm 7 ist ein Target 9 unterhalb eines Receivers 12 angeordnet. Dabei kann es sich um das Target 9 handeln, das bei Verfahren gemäß dem Stand der Technik zur Kalibrierung der Heliostate 1 verwendet wird. Das Target 9 wird über eine externe Leuchte 11 bestrahlt, sodass auf dem Target 9 ein Lichtfleck 13 gebildet ist. Der Lichtfleck 13 bildet die Lichtquelle, die für das erfindungsgemäße Verfahren verwendet wird.

Das erfindungsgemäße Verfahren wird zu einem Zeitpunkt mit geringer Solarstrahlung, beispielsweise nachts, durchgeführt. Zunächst werden ein Teil oder aller der Heliostaten 1 ausgerichtet, um das Licht der Lichtquelle 13 auf einen vorgegebenen Zielpunkt 15 zu reflektieren. Der Zielpunkt 15 kann beispielsweise ein Punkt am Himmel sein.

Mittels eines Fluggeräts 17, das mindestens eine Kamera trägt, wird ein vorgegebenes Flugmuster um und über den Zielpunkt 15 abgeflogen, wobei gleichzeitig Bilder der Heliostaten 1 mittels der Kamera aufgenommen werden.

Anschließend werden die Bilder ausgewertet, wobei für jedes Bild festgestellt wird, ob von der Lichtquelle reflektiertes Licht eines Heliostaten 1 zu erkennen ist oder nicht. Aus den Bildern wird nun anhand der zuvor bestimmten oder gespeicherten Aufnahmeposition des entsprechendes Bildes ein virtuelles Target 19 berechnet. Anhand der Information, ob in den Bildern Licht von einem Heliostaten 1 reflektiertes Licht der Lichtquelle zu erkennen ist, kann der Fokuspunkt 23 des entsprechenden Heliostaten 1 auf dem virtuellen Target 19 bestimmt werden.

Anschließend kann anhand der Fokuspunkte 23 der Heliostaten 1 auf dem virtuellen Target 19 jeweils ein Zielvektor für jeden Heliostaten 1 bestimmt werden. Dieser Zielvektor kann mit einem Sollwert für den Zielvektor verglichen werden, der beispielsweise aus der Auslegung des Solarturmkraftwerks oder durch eine Simulation bestimmt wurde. Durch den Vergleich mit dem Sollwert kann eine Soll-Ist-Abweichung bestimmt werden. In der Figur ist der Endpunkt des Sollwerts für den Zielvektor als Soll-Fokuspunkt 25 dargestellt.

Die Soll-Ist-Abweichung kann beispielsweise für die Kalibrierung des entsprechenden Heliostaten 1 genutzt werden.

Die Leuchte 11 kann so ausgestaltet sein, dass die Größe und Form des erzeugten Lichtflecks 13 auf dem Target 9 der Größe und Form eines durch Reflexion des Sonnenlichts auf dem Target 9 erzeugten Lichtflecks entspricht.

Um bei der Auswertung der Bilder die einzelne Heliostaten 1 identifizieren zu können, können in dem Heliostatenfeld 3 Marker 21 vorgesehen sein. In den aufgenommen Bildern können die Marker 21 erkannt werden und anhand der Position der Marker 21 wird die Identifizierung einzelner Heliostaten 1 vereinfacht. Auch kann vorgesehen sein, dass anhand einer Simulation des Heliostatenfelds 3, die die Heliostaten 1 und die Marker 21 enthält, durch Abgleichen mit den Bildern eine Identifizierung der Heliostaten 1 durchgeführt werden kann.

Das erfindungsgemäße Verfahren zum Vermessen von Heliostaten 1 kann zur Kalibrierung der Heliostaten 1 dienen, indem die bestimmte Soll-Ist-Abweichung für die Kalibrierung der Heliostaten 1 genutzt wird.

Das erfindungsgemäße Verfahren hat den Vorteil, dass die Vermessung bzw. Kalibrierung der Heliostaten 1 zu einem Zeitpunkt, in dem das Solarturmkraftwerk 10 nicht in Betrieb ist, nämlich nachts, durchgeführt werden kann. Die Vermessung kann unabhängig vom Sonnenstand erfolgen, wobei quasi jederzeit auch Daten aufgenommen werden können für Messpunkte, die einem Sonnenstand entsprechen, der nur kurzzeitig im Laufe eines Jahres auftritt. Auch kann eine große Anzahl Daten in sehr kurzer Zeit aufgenommen werden, also mit einer hohen zeitlichen Dichte der Datenpunkte.

Ferner kann eine hohe Anzahl von Heliostaten 1 gleichzeitig vermessen werden, da bei dem Überfliegen des Heliostatenfeldes 3 eine Vielzahl von Bildern mit einer Vielzahl oder sogar allen Heliostaten 1 in sehr kurzer Zeit aufgenommen werden können. Da lediglich festgestellt werden muss, ob ein Heliostat 1 Licht der Lichtquelle in die Kamera reflektiert hat, sodass das Licht des entsprechenden Heliostaten 1 auf dem Bild zu erkennen ist, ist die Menge der zu verarbeitenden Daten vergleichsweise gering, sodass das Verfahren in relativ kurzer Zeit ausgeführt werden kann.

Somit ermöglicht das erfindungsgemäße Verfahren ein zeitsparendes Vermessen und Kalibrieren von Heliostaten 1, wobei der vorrichtungstechnische Aufwand sehr gering gehalten werden kann.

### Bezugszeichenliste

- 1: Heliostaten
- 3: Heliostatfeld

- 7: Solarturm
- 9: Target
- 10: Solarturmkraftwerk
- 11: externe Leuchte
- 12: Receiver
- 13: Lichtfleck
- 15: Zielpunkt
- 17: Fluggerät
- 19: virtuelles Target
- 21: Marker
- 23: Fokuspunkt

## Patentansprüche

1. Verfahren zur Vermessung von Heliostaten (1) eines mehrere Heliostaten (1) aufweisenden Heliostatenfeldes (3) eines einen Solarturm (7) aufweisenden Solarturmkraftwerks (10), wobei die Heliostaten (1) jeweils mindestens einen eine Spiegelfläche aufweisenden Reflektor aufweisen mit folgenden Schritten:
a) Bereitstellen einer Lichtquelle,
b) Ausrichten zumindest einiger zu vermessender Heliostaten, um Licht der Lichtquelle auf einen vorgegebenen Zielpunkt (15) oder Zielbereich am Himmel oder im Nahbereich des Solarturms zu reflektieren,
c) Bewegen eines Fluggeräts (17) mit mindestens einer Kamera entlang einem vorgegebenen Flugmuster um und über den Zielpunkt oder Zielbereich und gleichzeitige Aufnahme von Bildern eines der oder mehrerer der zu vermessenden Heliostaten mittels der Kamera in einem vorgegebenen Zeitabstand,
d) Auswerten der Bilder, wobei für jeden der zu vermessenden Heliostaten in zumindest einigen der Bilder festgestellt wird, ob Licht der Lichtquelle in die Kamera reflektiert wurde, und wobei ein virtuelles Target aus den Bildern mittels einer zuvor bestimmten oder gespeicherten Aufnahmeposition des entsprechenden Bildes berechnet wird, wobei der Fokuspunkt für jeden zu vermessenden Heliostaten auf dem virtuellen Target bestimmt wird,
e) Bestimmen eines Zielvektors jedes der zu vermessenden Heliostaten anhand des Fokuspunktes auf dem virtuellen Target (19) und Vergleich mit einem Sollwert zur Bestimmung einer Soll-Ist-Abweichung,
wobei zumindest die Schritte a) bis c) zu einem Zeitpunkt mit geringer solarer Strahlung oder nachts durchgeführt werden.

2. Verfahren nach Anspruch 1, **dadurch gekennzeichnet, dass** die Lichtquelle durch ein auf einem Target (9) erzeugten Lichtfleck (13) gebildet ist, wobei das Target (9) an einem Turm angeordnet ist, und wobei das Target durch eine externe Leuchte (11) zur Bildung des Lichtflecks angestrahlt wird und die den Lichtfleck bildende Strahlung reflektiert oder wobei das Target zur Bildung des Lichtflecks (13) durch eine Leuchte hinterleuchtet ist.

3. Verfahren nach Anspruch 1, **dadurch gekennzeichnet, dass** die Lichtquelle durch eine oder mehrere an dem Solarturm angeordneten Leuchten gebildet ist.

4. Verfahren nach Anspruch 2 oder 3, **dadurch gekennzeichnet, dass** die Größe des Lichtflecks oder einer Leuchtfläche der Leuchte oder der Leuchten an die Größe einer Reflexion der Sonne durch mindestens einen der Heliostaten auf den Solarturm, vorzugsweise auf das Target, angepasst ist.

5. Verfahren nach einem der Ansprüche 2 bis 4, **dadurch gekennzeichnet, dass** die Form des Lichtflecks oder einer Leuchtfläche der Leuchte oder der Leuchten an die Form einer Reflexion der Sonne durch mindestens einen der Heliostaten auf den Solarturm, vorzugsweise auf das Target, angepasst ist.

6. Verfahren nach einem der Ansprüche 1 bis 5, **dadurch gekennzeichnet, dass** das Flugmuster eine Mäanderform oder Spirale enthält und/oder dass das Flugmuster in einer Ebene, in der der vorgegebenen Zielpunkt oder der Zielbereich liegt, angeordnet ist.

7. Verfahren nach einem der Ansprüche 1 bis 6, **dadurch gekennzeichnet, dass** die Schritte d) und e) nach Beendigung des Schrittes c) offline von dem Fluggerät erfolgen.

8. Verfahren nach einem der Ansprüche 1 bis 7, **dadurch gekennzeichnet, dass** mehrere Marker (21) im Heliostatenfeld (3) vorgesehen sind, wobei in Schritt d) anhand der Marker in den Bildern einzelne der zu vermessenden Heliostaten identifizierbar sind.

9. Verfahren nach Anspruch 8, **dadurch gekennzeichnet, dass** zur Identifizierung einzelner der zu vermessenden Heliostaten eine Simulation, die die Position zumindest einiger der Heliostaten und der Marker enthält, verwendet wird und ein Abgleich mit den Bildern erfolgt.

10. Verfahren zur Vermessung von Heliostaten (1) eines mehrere Heliostaten (1) aufweisenden Heliostatenfeldes (3) eines einen Solarturm (7) aufweisenden Solarturmkraftwerks (10), wobei die Heliostaten (1) jeweils mindestens einen eine Spiegelfläche aufweisenden Reflektor aufweisen mit folgenden Schritten:
a) Bereitstellen einer beweglichen Lichtquelle und Bewegen der Lichtquelle durch einen Reflexionsbereich von zumindest einigen zu vermessenden Heliostaten
b) Bestimmen der Position der Lichtquelle zu verschiedenen Zeitpunkten,
c) Ausrichten zumindest einiger zu vermessender Heliostaten, um Licht der Lichtquelle auf ein eine Zielfläche zu reflektieren, wobei an der Zielfläche eine Vielzahl von Kameras in einem Raster angeordnet sind,
d) Aufnahme von Bildern eines der oder mehrerer der zu vermessenden Heliostaten mittels der Kameras in einem vorgegebenen Zeitabstand,
e) Auswerten der Bilder, wobei für jeden der zu vermessenden Heliostaten in zumindest einigen der Bilder festgestellt wird, ob Licht der Lichtquelle in eine der Kameras reflektiert wurde, und wobei aus den Bildern mittels der zuvor bestimmten Position Lichtquelle der Fokuspunkt für jeden zu vermessenden Heliostaten auf der Zielfläche bestimmt wird,
f) Bestimmen eines Zielvektors jedes der zu vermessenden Heliostaten anhand des Fokuspunktes auf der Zielfläche und Vergleich mit einem Sollwert zur Bestimmung einer Soll-Ist-Abweichung,
wobei zumindest die Schritte a) bis d) zu einem Zeitpunkt mit geringer solarer Strahlung oder nachts durchgeführt werden.

11. Verfahren nach Anspruch 10, **dadurch gekennzeichnet, dass** die Kameras jeweils eine Fischaugenlinse aufweisen, oder pro Messpunkt zwei Kameras, die in unterschiedliche Richtungen gerichtet sind, angeordnet sind.

12. Verfahren nach Anspruch 10 oder 11, **dadurch gekennzeichnet, dass** die Lichtquelle mittels eines Fluggeräts bewegt wird.

13. Verfahren nach einem der Ansprüche 10 bis 12, **dadurch gekennzeichnet, dass** die Position der Lichtquelle durch Tracken der Lichtquelle mittels eines Tachymeters bestimmt wird, wobei die Lichtquelle vorzugsweise ein von innen beleuchteter Ballon ist.

14. Verfahren nach einem der Ansprüche 11 bis 13, **dadurch gekennzeichnet, dass** die Lichtquelle entlang einer Flugbahn bewegt wird, die an unterschiedliche Sonnenbahnen, entlang denen die Sonne sich im Jahresverlauf bewegt, angepasst ist.

15. Verfahren zur Kalibrierung von Heliostaten (1) eines mehrere Heliostaten (1) aufweisenden Heliostatenfeldes eines einen Solarturm aufweisenden Solarturmkraftwerks, wobei die Heliostaten (1) jeweils mindestens einen eine Spiegelfläche aufweisenden Reflektor aufweisen mit folgenden Schritten:
I) Durchführen des Verfahrens gemäß einer der Ansprüche 1 bis 14,
II) Kalibrieren der zu vermessenden Heliostaten mittels der Soll-Ist-Abweichung

## Claims

1. A method for measuring heliostats (1) in a heliostat field (3) that has a plurality of heliostats (1) and is part of a solar tower power plant (10) that has a solar tower (7), the heliostats (1) each having at least one reflector having a mirror surface, said method comprising the following steps:
a) providing a light source,
b) aligning at least some heliostats to be measured in order to reflect light from the light source onto a predefined target point (15) or target area in the sky or in the vicinity of the solar tower,
c) moving a flying apparatus (17) having at least one camera along a predefined flight pattern around and over the target point or target area, and simultaneously capturing images of one of the one or more heliostats to be measured by means of the camera at a predefined time interval,
d) evaluating the images, wherein, for each of the heliostats to be measured in at least some of the images, it is determined whether light from the light source has been reflected into the camera, and wherein a virtual target is calculated from the images by means of a previously determined or stored capturing position of the corresponding image, wherein the focal point for each heliostat to be measured is determined on the virtual target,
e) determining, by means of the focal point on the virtual target (19), a target vector of each of the heliostats to be measured and comparing it with a target value in order to determine a target/actual deviation,
wherein at least steps a) to c) are carried out at a time with low solar radiation or at night.

2. Method according to claim 1, **characterized in that** the light source is formed by a light spot (13) formed on a target (9), the target (9) being arranged on a tower, and the target being irradiated by an external light (11) to form the light spot and reflecting the radiation that forms the light spot, or the target being backlit by a light to form the light spot (13).

3. Method according to claim 1, **characterized in that** the light source is formed by one or more lights arranged on the solar tower.

4. Method according to claim 2 or 3, **characterized in that** the size of the light spot or a lighting area of the light or the lights is adapted to the size of a reflection of the sun by at least one of the heliostats onto the solar tower, preferably on the target.

5. Method according to one of claims 2 to 4, **characterized in that** the shape of the light spot or a lighting area of the light or the lights is adapted to the shape of a reflection of the sun by at least one of the heliostats onto the solar tower, preferably on the target.

6. Method according to any of claims 1 to 5, **characterized in that** the flight pattern includes a meander or spiral shape and/or the flight pattern is arranged in a plane in which the preset target point or the target area is located.

7. Method according to one of claims 1 to 6, **characterized in that** steps d) and e) can be performed offline of the flying apparatus after the end of step c).

8. Method according to one of claims 1 to 7, **characterized in that** several markers (21) are provided in the heliostat field (3), wherein in step d) individual heliostats to be measured can be identified by means of the markers in the images.

9. Method according to claim 8, **characterized in that** for identifying individual heliostats to be measured, a simulation including the position of at least some of the heliostats and the markers is used and the simulation is compared to the images.

10. A method for measuring heliostats (1) in a heliostat field (3) that has a plurality of heliostats (1) and is part of a solar tower power plant (10) that has a solar tower (7), the heliostats (1) each having at least one reflector having a mirror surface, said method comprising the following steps:
a) providing a movable light source and moving the light source through a reflection are of at least some heliostats to be measured,
b) determine the position of the light source at different times,
c) aligning at least some heliostats to be measured in order to reflect light from the light source onto a target surface, wherein a plurality of cameras is arranged in a grid on the target surface,
d) capturing images of one or more of the heliostats to be measured using the cameras at a specified time interval,
e) evaluating the images, wherein for each of the heliostats to be measured it is determined in at least some of the images whether light from the light source has been reflected into one of the cameras, and wherein the focal point for each heliostat to be measured on the target surface is determined from the images by means of the previously determined position of the light source,
f) determining, by means of the focal point on the virtual target, a target vector of each of the heliostats to be measured and comparing it with a target value in order to determine a target/actual deviation,
wherein at least steps a) to c) are carried out at a time with low solar radiation or at night.

11. Method according to claim 10, **characterized in that** the cameras each have a fisheye lens or that two cameras are arranged per measuring point, which are directed in different directions.

12. Method according to claim 10 or 11, **characterized in that** the light source is moved by means of a flying apparatus.

13. Method according to one of claims 10 to 12, **characterized in that** the position of the light source is determined by tracking the light source using a tachymeter, wherein the light source preferably is an internally lit balloon.

14. Method according to one of claims 11 to 13, **characterized in that** the light source is moved along a trajectory which is adapted to different sun orbits along which the sun moves in the course of a year.

15. A method for calibrating heliostats (1) in a heliostat field that has a plurality of heliostats (1) and is part of a solar tower power plant that has a solar tower, the heliostats (1) each having at least one reflector having a mirror surface, said method comprising the following steps:
I) performing the method according to one of claims 1 to 14,
II) calibrating the heliostats to be measured using the target/actual deviation.

## Revendications

1. Procédé pour la mesure d'héliostats (1) d'un champ d'héliostats (3), présentant plusieurs héliostats (1), d'une centrale solaire à tour (10) présentant une tour solaire (7), dans lequel les héliostats (1) présentent respectivement au moins un réflecteur présentant une surface de miroir, comportant les étapes suivantes :
a) fourniture d'une source de lumière,
b) orientation d'au moins certains héliostats à mesurer, afin de réfléchir la lumière de la source de lumière sur un point cible (15) ou, une zone cible, prédéfini dans le ciel ou dans la zone proche de la tour solaire,
c) déplacement d'un appareil volant (17) comportant au moins une caméra le long d'un modèle de vol prédéfini autour et au-dessus du point cible ou de la zone cible et prise simultanée d'images d'un ou de plusieurs des héliostats à mesurer au moyen de la caméra à un intervalle de temps prédéfini,
d) évaluation des images, dans lequel, pour chacun des héliostats à mesurer dans au moins certaines des images, on détermine si la lumière de la source de lumière a été réfléchie dans la caméra, et dans lequel une cible virtuelle est calculée à partir des images au moyen d'une position de prise de vue préalablement déterminée ou mémorisée de l'image correspondante, dans lequel le point focal est déterminé pour chaque héliostat à mesurer sur la cible virtuelle,
e) détermination d'un vecteur cible de chacun des héliostats à mesurer à l'aide du point focal sur la cible virtuelle (19) et comparaison avec une valeur de consigne pour la détermination d'un écart entre valeur de consigne et valeur réelle,
dans lequel au moins les étapes a) à c) sont mises en œuvre à un moment où le rayonnement solaire est faible ou pendant la nuit.

2. Procédé selon la revendication 1, **caractérisé en ce que** la source de lumière est formée par une tache lumineuse (13) générée sur une cible (9), dans lequel la cible (9) est disposée sur une tour, et dans lequel la cible est éclairée par un luminaire externe (11) pour la formation de la tache lumineuse et réfléchit le rayonnement formant la tache lumineuse, ou dans lequel la cible est rétroéclairée par un luminaire pour la formation de la tache lumineuse (13).

3. Procédé selon la revendication 1, **caractérisé en ce que** la source de lumière est formée par un ou plusieurs luminaires disposés sur la tour solaire.

4. Procédé selon la revendication 2 ou 3, **caractérisé en ce que** la taille de la tache lumineuse ou d'une surface lumineuse du luminaire ou des luminaires est adaptée à la taille d'une réflexion du soleil par au moins un des héliostats sur la tour solaire, de préférence sur la cible.

5. Procédé selon les revendications 2 à 4, **caractérisé en ce que** la forme de la tache lumineuse ou d'une surface lumineuse du luminaire ou des luminaires est adaptée à la forme d'une réflexion du soleil par au moins un des héliostats sur la tour solaire, de préférence sur la cible.

6. Procédé selon l'une des revendications 1 à 5, **caractérisé en ce que** le modèle de vol contient une forme de méandre ou une spirale et/ou **en ce que** le motif de vol est disposé dans un plan dans lequel se trouve le point cible, ou la zone cible, prédéfini.

7. Procédé selon l'une des revendications 1 à 6, **caractérisé en ce que** les étapes d) et e) sont effectuées hors ligne par l'appareil volant après la fin de l'étape c).

8. Procédé selon l'une des revendications 1 à 7, **caractérisé en ce que** plusieurs marqueurs (21) sont prévus dans le champ d'héliostats (3), dans lequel certains des héliostats à mesurer peuvent être identifiés à l'étape d) à l'aide des marqueurs dans les images.

9. Procédé selon la revendication 8, **caractérisé en ce que**, pour l'identification de certains des héliostats à mesurer, une simulation, laquelle contient la position d'au moins certains des héliostats et des marqueurs, est utilisée et une comparaison avec les images est effectuée.

10. Procédé pour la mesure d'héliostats (1) d'un champ d'héliostats (3), présentant plusieurs héliostats (1), d'une centrale solaire à tour (10) présentant une tour solaire (7), dans lequel les héliostats (1) présentent respectivement au moins un réflecteur présentant une surface de miroir, comportant les étapes suivantes :
a) mise à disposition d'une source de lumière mobile et déplacement de la source de lumière à travers une zone de réflexion d'au moins certains héliostats à mesurer,
b) détermination de la position de la source de lumière à différents moments,
c) orientation d'au moins certains héliostats à mesurer, afin de réfléchir la lumière de la source de lumière sur une surface cible, dans lequel une pluralité de caméras est disposée sur la surface cible selon une trame,
d) prise d'images d'un ou de plusieurs des héliostats à mesurer au moyen des caméras à un intervalle de temps prédéfini,
e) évaluation des images, dans lequel, pour chacun des héliostats à mesurer, dans au moins certaines des images, on détermine si la lumière de la source de lumière a été réfléchie dans l'une des caméras, et dans lequel, à partir des images, le point focal pour chaque héliostat à mesurer sur la surface cible est déterminé au moyen de la position de la source de lumière préalablement déterminée,
f) détermination d'un vecteur cible de chacun des héliostats à mesurer à l'aide du point focal sur la surface cible et comparaison avec une valeur de consigne pour la détermination d'un écart entre valeur de consigne et valeur réelle,
dans lequel au moins les étapes a) à d) sont mises en oeuvre à un moment où le rayonnement solaire est faible ou pendant la nuit.

11. Procédé selon la revendication 10, **caractérisé en ce que** les caméras présentent respectivement une lentille ultra-grand-angle, ou deux caméras sont disposées par point de mesure, lesquelles sont orientées dans des directions différentes.

12. Procédé selon la revendication 10 ou 11, **caractérisé en ce que** la source de lumière est déplacée au moyen d'un appareil volant.

13. Procédé selon l'une des revendications 10 à 12, **caractérisé en ce que** la position de la source de lumière est déterminée en suivant la source de lumière au moyen d'un tachéomètre, dans lequel la source de lumière est de préférence un ballon éclairé de l'intérieur.

14. Procédé selon l'une des revendications 11 à 13, **caractérisé en ce que** la source de lumière est déplacée le long d'une ligne de vol adaptée aux différentes trajectoires solaires le long desquelles le soleil se déplace au cours de l'année.

15. Procédé pour le calibrage d'héliostats (1) d'un champ d'héliostats, présentant plusieurs héliostats (1), d'une centrale solaire à tour présentant une tour solaire, dans lequel les héliostats (1) présentent respectivement au moins un réflecteur présentant une surface de miroir, comportant les étapes suivantes :
I) mise en œuvre du procédé selon l'une des revendications 1 à 14,
II) calibrage des héliostats à mesurer au moyen de l'écart entre valeur de consigne et valeur réelle
